(19) Europäisches Patentamt
European Patent Office
Office européen des brevets

(11) Publication number: 0 180 276 B1

# (12) EUROPEAN PATENT SPECIFICATION

(45) Date of publication of patent specification: 28.12.88

(51) Int. Cl.[4]: C 07 F 9/15, C 07 B 57/00, C 07 C 101/04, C 07 C 93/14

(21) Application number: 85201677.3

(22) Date of filing: 14.10.85

## (54) Dioxaphosphorinanes, their preparation and use for resolving optically active compounds.

(30) Priority: 24.10.84 NL 8403224

(43) Date of publication of application: 07.05.86 Bulletin 86/19

(45) Publication of the grant of the patent: 28.12.88 Bulletin 88/52

(84) Designated Contracting States: BE CH DE FR GB IT LI LU NL SE

(56) References cited:
GB-A-1 360 946

BULLETIN OF THE CHEMICAL SOCIETY OF JAPAN, vol. 42, no. 6, June 1969, pages 1713-1718; M. KAINOSHO et al.: "Phosphorus-proton spin-spin coupling in the P-O-C-H group. A comparison of cyclic and acyclic systems"

(73) Proprietor: STAMICARBON B.V.
Mijnweg 1
NL-6167 AC Geleen (NL)

(72) Inventor: Wijnberg, Hans
Huygensweg 4
NL-9752 PA Haren (NL)
Inventor: Ten Hoeve, Wolter
Spirealaan 56
NL-9741 PD Groningen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 180 276 B1

Courier Press, Leamington Spa, England.

**Description**

This invention relates to novel dioxaphosphorinanes, the preparation of these compounds, and their use for resolving racemates of optically active amino-compounds into the individual optical isomers.

Several optically active acids are known which can be used as resolving agents for racemates of optically active amino-compounds, including amino-acids. Optically active amino-compounds are used on the one side for separating specific racemates of optically active acids and on the other side as an intermediate for the preparation of pharmaceuticals, inter alia. Examples of the latter use are phenylglycine, parahydroxyphenylglycine, 2-aminobutanol-1 and 2-amino-1-phenyl-1,3-propanediol.

Optically active acids are expensive generally; an additional factor is that they have to be prepared by a complex process. Moreover, these optically active resolving agents are not always proof against racemization in an acidic and/or alkaline medium and they are often difficult to recover after use. Also they are generally only suitable for separating a small number of racemates of optically active amino-compounds. For this reason attempts are continually being made to find optically active acids without the above disadvantages.

The compounds according to the invention are dioxaphosphorinanes having the general formula I

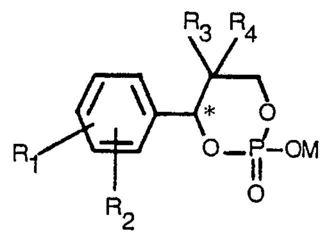

I

in which:

M denotes a hydrogen atom or a metal or ammonium ion,

$R_1$ and $R_2$ denote a hydrogen atom, a halogen atom, an alkyl group having 1 up to 4 carbon atoms, an alkoxy group having 1 up to 4 carbon atoms, a nitro group or together denote a methylene dioxy group and

$R_3$ and $R_4$ denote a hydrogen atom, a halogen atom, an alkyl group having 1 up to 4 carbon atoms or together denote a cyclohexyl group, one at most of the groups $R_3$ and $R_4$ denoting a hydrogen atom.

These compounds are simple and cheap to prepare, are easily resolved into optical isomers, are very resistant to racemization in an alkaline and acidic medium and are also easy to recover.

It should be noted that the potassium salt of 2-hydroxy-2-oxo-8-phenyl-1,2,3-dioxaphosphorinane is known from Bull. Chem. Soc. Jap., *42,* no. 6 (1969) pp. 1713—1718. This article however, gives no hint to the use of this compound as a resolving agent. Phosphorous containing compounds are, however, known from GB—A—1360946 as resolving agents. These compounds, however, show essential structural differences in relation to the compounds of the present invention.

The compounds according to the invention also have the advantage of being available in both the + and the − form. This is in contrast to the optically active compounds derived from natural products, of which generally only one of the isomers is available.

Particularly suitable are the above compounds in which:

$R_1$ and $R_2$ denote a hydrogen or chlorine atom, a methyl, ethyl, methoxy, ethoxy or nitro group or together denote a 3,4-methylene dioxy group and

$R_3$ and $R_4$ denote a hydrogen atom, a chlorine atom, a methyl group or together denote a cyclohexyl group.

Examples of suitable compounds are given in Table I.

The racemic dioxaphosphorinanes according to the invention can be prepared by reacting a racemic diol, having the general formula II

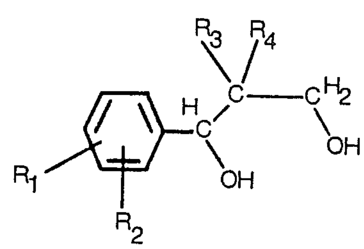

II

in which $R_1$ up to $R_4$ have the same meanings as in formula I, with phosphoryl chloride and hydrolyzing the resulting product in an alkaline medium.

The diols according to formula II are largely known compounds which can be obtained in known manner. In cases where $R_3$ and $R_4$ in formula II denote an alkyl group, such as methyl and ethyl, a mixed aldol condensation, for example, can be used by reacting 1 equivalent or an aromatic aldehyde with two equivalents of a dialkyl acetaldehyde in the presence of 1 equivalent of potassium hydroxide in alcoholic medium. This first results in an aldol which is reduced to a 1,3-diol by the excess of dialkyl acetaldehyde.

This reaction is described inter alia in US Patent 3 092 639. In cases in which $R_3$ and $R_4$ respectively denote a hydrogen and a halogen atom, the 1,3-diols can easily be prepared by reacting N-chlorosuccinic acid imide, or bromine with 3-phenyl-allyl alcohol. These processes are described in Dolby L. J., Wilkens C, Frey T. G., Journal Org. Chem. *31* (1966), 1110 and Bretschneider H, Karpitschka N, Monatsch. Chem. *84* (1953) 1043.

The optical isomers of the dioxaphosphorinanes according to the invention can be separated from the corresponding racemate with optically active amino-compounds such as (−)-ephedrine, (+)-2-amino-1-phenyl-1,3-propanediol, (−)-2-amino-1-butanol and (−)-para-hydroxyphenylglycine.

For the said compounds Table I indicates the optically active amines that can be used to separate the relevant optically active dioxaphosphorinanes from one another inter alia.

The optically active isomers of the dioxaphosphorinanes according to the invention can be used for separating the optically active isomers of various amino-compounds used inter alia as an intermediate for the preparation of pharmaceutical products. Although it is not possible to separate the optical isomers of any amino-compound with just a single dioxaphosphorinane according to the invention, dioxaphosphorinanes are fairly universally usable.

For example, using 5,5-dimethyl-4-(2′-methoxyphenyl)-2-hydroxy-2-oxo-1,3,2-dioxaphosphorinane (compound 3 in Table I) it is possible to separate the optically active isomers of phenylalanine, S-(amino-iminomethyl)-β-mercaptobutyric acid, parahydroxyphenylglycine, 1-phenyl-2-paramethoxyphenyl-ethyl-amine and N-[1-(4′-methoxyphenyl)-isopropyl]-N-ethyl-amine.

The 5,5-dimethyl-4-(2′-chlorophenyl)-2-hydroxy-2-oxo-1,3,2-dioxaphosphorinane (compound 9 in Table I) is suitable not only for resolving the above five amino-compounds into their optical isomers, but also for resolving 1,2,3,4-tetrahydro-5-methoxy-N-propyl-2-naphtalene-amine and 1,2-di-(4′-chlorophenyl)-1,2-diamino-ethane.

A third compound suitable for resolving parahydroxyphenylglycine, which is very important for the preparation of pharmaceutical products, is 5,5-dimethyl-4-(2′,4′-dichlorophenyl)-2-hydroxy-2-oxo-1,3,2-dioxaphosphorinane (compound 11 in Table I) which has also been found very suitable for resolving 1,2-di-(4′-chlorophenyl)-1,2-diaminoethane and 1-phenyl-2-para-methoxyphenyl-ethylamine.

The universal usability is further enhanced by the fact that a choice can be made from a wide range of optically active dioxaphosphorinanes.

TABLE I

| No. M=H | R1 | R2 | R3 | R4 | racemate melting point | resolved into optical isomers with | melting point of crytallised optical isomer | Absolute rotation $[A]_{578}$ of the optical pure forms |
|---|---|---|---|---|---|---|---|---|
| 1 | H | H | $CH_3$ | $CH_3$ | 224-224.5 | B | 230-231 | 60.1 |
| 2 | 2-$NO_2$ | H | $CH_3$ | $CH_3$ | | D | 229.5-230.5 | 489 |
| 3 | 2-$OCH_3$ | H | $CH_3$ | $CH_3$ | 204-205 | A | 195-197 | 63.8 |
| 4 | 4-$OCH_3$ | H | $CH_3$ | $CH_3$ | 195-196.5 | A,B | 203.5-204.5 | 68.3 |
| 5 | 3,4-$OCH_2O$- | | $CH_3$ | $CH_3$ | 200-201.5 | A | 201 | 59.2 |
| 6 | 4-Cl | H | $CH_3$ | $CH_3$ | 222-223 | A,B,C | 217-218 | 59.5 |
| 7 | H | H | Cl | H | 174-178 | A,B | | |
| 8 | H | H | Br | H | 190-192.5 | A | | |
| 9 | 2-Cl | H | $CH_3$ | $CH_3$ | 221.5-225.5 | A,D | 225.5-227 | 49.3 |
| 10 | 2-$OC_2H_5$ | H | $CH_3$ | $CH_3$ | 194-195 | A,D | 215.5-216.5 | 60.9 |
| 11 | 2-Cl | 4-Cl | $CH_3$ | $CH_3$ | 212.5-213 | A,B | 238.5-240.5 | 46.6 |
| 12 | 2-Cl | 6-Cl | $CH_3$ | $CH_3$ | 212-213 | A | 256-258 | 36.8 |
| 13 | 3-$NO_2$ | H | $CH_3$ | $CH_3$ | 209-213 | A,D | 242-250 | 56.9 |
| 14 | 4-$CH_3$ | H | $CH_3$ | $CH_3$ | 219-221 | B | 220-222 | 66.9 |
| 15 | 2-Cl | H | cyclohexyl | | 224.5-225.5 | A,D | 246.5-247.5 | 29.5 |

A = (-)-ephedrine
B = (+)-2-amino-1-phenyl-1,3-propanediol
C = (-)-2-amino-1-butanol
D = (-)-para-hydroxyphenylglycine

The invention will be explained in detail with reference to the following examples.

Example I

Preparation of 5,5-dimethyl-4-(2'-chlorophenyl)-2-hydroxy-2-oxo-1,3,2-dioxaphosphorinane. (Compound 9 in Table I).

A solution of 141.0 g (0.92 mole) of phosphoryl chloride in 250 ml of dichloromethane was added over a period of 1 hour with agitation to 183.1 g (0.854 mole) of 1-(2'-chlorophenyl)-2,2-dimethyl-1,3-dihydroxypropane in 400 ml of dichloromethane. The mixture was heated with reflux for 4 hours and then concentrated by evaporation. The resulting residue was heated with agitation with a solution of 100 g of sodium hydroxide (2.5 mole) in 1 litre of water until a substantially clear liquid was obtained. The mixture, from which a granular substance rapidly separated, was cooled to 70°C and mixed with 290 ml of concentrated hydrochloric acid. An oil formed, which rapidly solidified. After filtering off the remaining liquid, washing with water and ether, followed by drying at 80°C, 201.6 g (0.729 mole) of the above dioxaphosphorinane was obtained, equivalent to an 85% yield.

Example II

Preparation of 5,5-dimethyl-4-(2'-methoxyphenyl)-2-hydroxy-2-oxo-1,3,2-dioxaphosphorinane. (Compound 3 in Table I).

A mixture of 122 g (0.796 mole) of phosphoryl chloride in 250 ml of dichloromethane was added over a period of half an hour with cooling to 163.5 g (0.779 mole) of 1-(2'-methoxyphenyl)-2,2-dimethyl-1,3-dihydroxy-propane and 168.7 g (1.67 mole) of triethylamine in 350 ml of dichloromethane. After 4½ hours' heating with reflux, the reaction mixture was twice extracted with 750 ml of water. The water layers were extracted with 300 ml of dichloromethane.

All the dichloromethane fractions were dried on sodium sulphate and concentrated by evaporation. The remaining oil was heated with a solution of 88 g (2.2 mole) of sodium hydroxide in 800 ml of water until a clear solution formed. This solution was cooled and 250 ml of concentrated hydrochloric acid was added at 40°C. The result was an oil which solidified on further cooling. After removal of the liquid, washing with water and ether, and drying 173.3 g (0.637 mole) of the above dioxaphosphorinane was obtained. The yield was 83%.

Example III

The compounds 1, 2, 6, 11, 12, 13 and 15 of Table I were prepared in the same way as in Example I from the corresponding diol.

Example IV

The compounds 4, 5, 10 and 14 of Table I were prepared in the same way as in Example II from the corresponding diol.

Example V

Preparation of 5-bromo-4-phenyl-2-hydroxy-2-oxo-1,3,2-dioxaphosphorinane. (Compound 8 in Table I).

A mixture of 18.5 g (0.121 mole) of phosphoryl chloride and 50 ml of dichloromethane was added over a period of 15 minutes to a mixture of 23.1 g (0.100 mole) of 2-bromo-1-phenyl-1,3-propanediol, 18.1 g (0.229 mole) of pyridine and 200 ml of dichloromethane. The mixture was heated with reflux for 3 hours and washed twice with 250 ml of water. The water layers were extracted with 150 ml of dichloromethane. The dichloromethane fractions were dried on sodium sulphate and concentrated by evaporation. The resulting residue was mixed with 12.5 g (0.313 mole) of sodium hydroxide and 200 ml of water and was heated for 1½ hours at a temperature of 65—70°C. After cooling to 20°C the resulting solution was acidified with 50 ml of concentrated hydrochloric acid. The precipitated dioxaphosphorinane was sucked off and washed with water and ether. The yield was 23.9 g (81.6 m mole) equivalent to an 82% yield.

Example VI

Resolution of the optical isomers of 5,5-dimethyl-4-(2'-ethoxyphenyl)-2-hydroxy-2-oxo-1,3,2-dioxaphosphorinane. (Compound 10 in Table I).

A mixture of 115.4 g (0.403 mole) of the racemate of compound 10 and 68.0 g (0.407 mole) of (−)-para-hydroxyphenylglycine was dissolved with heating in 1400 ml of a 1:1 mixture of water and ethanol. The solution was cooled by leaving it at room temperature for 5 hours with agitation and the occasional addition of seed crystals. The diastereomeric salt which crystallized out was filtered off and washed with 250 ml of water. After drying the weight was 66.8 g (0.147 mole) and the optical rotation. $[\alpha]_{578} = -98.5$. The yield was 37%. The diastereomeric salt obtained in this way was agitated for 5 hours with a mixture of 30 ml of concentrated hydrochloric acid and 300 ml of water. After filtration and drying, 42.0 g (0.147 mole) of dioxaphosphorinane with an optical rotation $[\alpha]_{578} = -60.9$ was obtained. Hydrolysis of the filtrate remaining after filtration of the diastereomeric salt, known as the main filtrate, yielded 61.6 g of dioxaphosphorinane with an optical rotation $[\alpha]_{578} = +37.0$. $[\alpha]_{578}$ here and hereinafter is given for C = 0.5 g per 100 ml solution in methanol unless otherwise stated.

Example VII

Resolution of the optical isomers of 5,5-dimethyl-4-phenyl-2-hydroxy-2-oxo-1,3,2-dioxaphosphorinane. (Compound 1 in Table I).

A mixture of 24.2 g (0.1 mole) of the racemate of compound 1 and 16.7 g (0.1 mole) of (+)-2-amino-1-phenyl-1,3-propanediol was dissolved by heating in 200 ml of ethanol. The solution was concentrated by evaporation and 11.9 g of diastereomeric salt was obtained therefrom after cooling. The filtrate was further concentrated by evaporation and combined with a mixture of 122 g (0.504 mole) of racemate of compound 1, 85 g (0.509 mole) of (+)-2-amino-1-phenyl-1,3-propanediol and 450 ml of ethanol. After heating until dissolution, the mixture was cooled by leaving it at room temperature for 12 hours with agitation. The precipitated salt was filtered off, washed with water and ether and dried. In this second step, 46.85 g of diastereomeric salt with an optical $[\alpha]_{578} = -15.7$ was obtained. Another 31.7 g of diastereomeric salt with $[\alpha]_{578} = -11.2$ was crystallized out of the washing liquid and the main filtrate by concentrating by evaporation and cooling to −15°C, and yielded 20.5 g of pure diastereomeric salt by recrystallization with 80 ml of ethanol. The total production of crystallized-out diastereomeric salt was 79.26 (0.194 mole). The yield was 32%.

The 46.85 g of diastereomeric salt from the second step were converted with a 100% yield into the free dioxaphosphorinane by treatment with 150 ml of hydrochloric acid in 300 ml of water. The optical rotation was −60.1 ($[\alpha]_{578}$, C = 1, $CH_3OH$).

From the remaining filtrate of the third step it was possible after considerable concentration by evaporation to filter off a portion of salt which after hydrolysis yielded 32.86 g of dioxaphosphorinane with $[\alpha]_{578} = 37.0$.

After further concentration of the remaining filtrate, another portion of salt was obtained which after hydrolysis yielded 43.0 g of dioxaphosphorinanes with $[\alpha]_{578} = +42.9$. Recrystallization of the latter two portions from a 3:1 mixture of ethanol and water yielded 23.47 g and 31.61 g respectively of purified dioxaphosphorinane with $[\alpha]_{578} = +54.2$ and 60.2 respectively.

Example VIII

Resolution of the optical isomers of 5,5-dimethyl-4-(2′4′-dichlorophenyl)-2-hydroxy-2-oxo-1,3,2-dioxaphosphorinane. (Compound 11 in Table I).

A mixture of 285.5 g (0.918 mole) of the dioxaphosphorinane and 155 g (0.939 mole of (−)-ephedrine was dissolved with heating in 500 ml of ethanol. The solution was cooled to 20°C with agitation. Agitation was continued for another 4 hours and then the mixture was left to stand for 12 hours. After filtration of the precipitate, washing with ether, recrystallization from 430 ml of ethanol and drying, 118.5 g (0.249 mole) of diastereomeric salt was obtained with an optical rotation $[\alpha]_{578} = +6.2$. The yield was 27%. Using 117 g, hydrolysis with 50 ml of concentrated hydrochloric acid in 450 ml of water gave 75.45 g (0.243 mole) of dioxaphosphorinane with an optical rotation $[\alpha]_{578} = +46.6$. The yield was 97%.

From the main filtrate, after evaporation of 250 ml of ethanol, a diastereomeric salt was precipitated which, after filtration, washing with ether and drying, weighed 52.5 (0.110 mole) and had an optical rotation $[\alpha]_{578} = -44.0$. Hydrolysis of this product was 20 ml of hydrochloric acid in 180 ml of water yielded 32.4 (0.104 mole) of dioxaphosphorinane with $[\alpha]_{578} = -43.2$.

Example IX

Resolution of the optical isomers of 5,5-dimethyl-4-(2′-chlorophenyl)-2-hydroxy-2-oxo-1,3,2-dioxaphosphorinane. (Compound 9 in Table I).

A mixture of 169.9 g (0.615 mole) of racemate of compound 9 and 102.7 g (0.615 mole of (−)-para-hydroxphenylglycine was dissolved with heating in a mixture of 1030 ml of 96% ethanol and 800 ml of water. The mixture was cooled by leaving it at room temperature with agitation and occasional addition of seed crystals. Agitation was then continued for 12 hours and the precipitated diastereomeric salt was filtered off, washed with 300 ml of water and dried. The production was 103.6 g (0.234 mole), equivalent to a 38% yield. The optical rotation was −95.7 $[\alpha]_{578}$).

The resulting diastereomeric salt was hydrolyzed by agitating it for 6 hours with 105 ml of concentrated hydrochloric acid and 465 ml of water. After filtration, washing with water and drying, 58.8 g of dioxaphosphorinane were obtained (91% yield) with an optical rotation $[\alpha]_{578} = -49.3$.

From the main filtrate, after the treatment of para-hydroxyphenylglycine was left to stand for 2 days and then agitated for 7 hours with 150 ml of concentrated hydrochloric acid. After suction filtration, washing and drying, 74.3 g of dioxaphosphorinane was obtained with $[\alpha]_{578} = +48.9$.

Example X

Resolution of the optical isomers of 5,5-dimethyl-4-(2′-nitrophenyl)-2-hydroxy-2-oxo-1,3,2-dioxaphosphorinane. (Compound 2 in Table I).

A mixture of 58.6 g (0.204 mole) of the racemate of compound 2 and 34.2 (0.205 mole of (−)-para-hydroxyphenylglycine was dissolved with heating in 600 ml of 1:1 mixture of water and absolute alcohol. The mixture was cooled by leaving it at room temperature with agitation and occasional addition of seed crystals. After 12 hours' agitation, the precipitated diastereomeric salt was filtered off, washed with water and dried at 75°C. The yield was 40.5 g (89.2 mole, 44%). The optical rotation of the salt $[\alpha]_{578} = -353$.

39.95 g of the resulting salt was agitated for 7 hours with 45 ml of concentrated hydrochloric acid in 135 ml of water. The precipitated dioxaphosphorinane was filtered off and washed and after drying weighed 23.6 g (82.2 m mole, 94%) and $[\alpha]_{578}$ was −463.

After the treatment with para-hydroxyphenylglycine the main filtrate, after decomposition with hydrochloric acid, yielded 27.7 g of dioxaphosphorinane with $[\alpha]_{578}$ = +409. Recrystallization of this product with $CH_3OH$ yielded 17.73 g with $[\alpha]_{578}$ = +489. Over 6 g of the dioxaphosphorinane with positive rotation were additionally obtained after concentrating the filtrate by evaporation.

It was found that the resolutions according to Example VI up to X are reversible, i.e. the optical isomers of the relevant amine can be separated with relevent dioxaphosphorinane.

Example XI

Resolution of the optical isomers of phenylalanine with (−)-5,5-dimethyl-4-(2′-chlorophenyl)-2-hydroxy-2-oxo-1,3,2-dioxaphosphorinane. (Compound 9 in Table I).

A mixture of 8.80 g (31.8 m mole) of the (−) form of the dioxaphosphorinane and 5.25 g (31.8 m mole) of phenylalanine racemate was dissolved with heating in 60 ml of water and 25 ml of absolute alcohol. The mixture was cooled by leaving it at room temparature with agitation and the occasional addition of seed crystals. After 5½ hours' agitation the precipitate was filtered off, washed with water and dried. The yield was 6.03 g (13.7 m mole) equivalent to a 43% yield. The $[\alpha]_{578}$ of the precipitate was −26.6. Of this product 5.87 g (13.3 m mole) were hydrolyzed by agitation for 7 hours with 7 ml of concentrated hydrochloric acid and 63 ml of water. The dioxaphosphorinane re-liberated in this way was filtered off and washed and after drying weighed 3.5 g (12.7 m mole). This means that 95% was recovered. The filtrate was dissolved in a mixture of 10 ml of water and 5 ml of ethanol and neutralized with a dilute sodium hydroxide solution. The resulting precipitate consisted of 1.1 g (+)-phenyl-alanine with $[\alpha]_{578}$ = +34.2 (C = 1.96, $H_2O$).

The remaining filtrate after concentration by evaporation and purification over a Dowex —$H^+$ column yielded another 0.75 g phenylalanine with $[\alpha]_{578}$ = +32.8.

The total yield was 1.85 g (11.2 m mole) equivalent to 84%.

Example XII

Resolution of the optical isomers of 1-phenyl-2-paramethoxyphenylethylamine with (+)-5,5-dimethyl-4-(2′-4′-dichlorophenyl)-2-hydroxy-2-oxo-1,3,2-dioxaphosphorinane. (Compound 11 in Table I).

A mixture of 12.5 g of the impure amine and 14.5 g (46.6 m mole) of the dioxaphosphorinane was heated with 105 ml of methanol for 60 hours with agitation. From the mixture it was possible to recover 8.14 g (15.1 m mole, 32%) of the diastereomeric salt with $[\alpha]_{578}$ = +76.9. Of this product, 7.93 g were agitated with 150 ml of 1N sodium hydroxide solution. After agitating the suspension for 16 hours, 50 ml of chloroform were added and after agitation for another half hour the solid was filtered. From this solid, which consisted of the sodium salt of the dioxaphosphorinane, the free acid can be recovered after acidification. The filtrate, which consisted of two layers, was separated by means of a separating funnel. The aqueous layer was extracted with 40 ml of chloroform and the chloroform layer was washed with water. The chloroform fractions were dried, concentrated by evaporation and purified by Kugelrohr distillation at 135°C under a pressure of 0.03 mm Hg. This yielded 3.05 g of colourless amine (13.4 m mole) equivalent to 91% yield). The $[\alpha]_{578}$ was +64.3 (C = 1.07, $CH_3OH$).

Example XIII

Resolution of the optical isomers of the amine of Example XII with (−)-5,5-dimethyl-4-(2′-methoxyphenyl)-2-hydroxy-2-oxo-1,3,2-dioxaphosphorinane. (Compound 3 in Table I).

A mixture of 16.8 g (61.8 m mole) of the dioxaphosphorinane and 15.5 g of the impure amine was dissolved with heating in a mixture of 50 ml of 96% ethanol and 10 ml of water. After cooling, by leaving the mixture to stand for 12 hours with agitation, it was possible to filter off 7.92 g (15.9 m mole) of diastereomeric salt. The yield was 26%. The optical rotation $[\alpha]_{578}$ was −86.3. Of this product, 7.5 g was agitated for 5 hours with a solution of 4.0 g of sodium hydroxide in 100 ml of water. The liquid was extracted twice with 50 ml of chloroform, washed with 50 ml of water, dried and concentrated by evaporation. Kugelrohr distillation yielded 3.2 g (14.1 m mole, yield 94%) of amine with $[\alpha]_{578}$ = −63.8 (C = 1.11, $CH_3OH$).

From the aqueous liquid remaining after extraction with chloroform it was possible to recover 14.71 g of dioxaphosphorinane after acidification, equivalent to an 88% yield.

Example XIV

Separation of the optical isomers of methionine with (+)-5,5-dimethyl-4-(2′-chlorophenyl)-2-hydroxy-2-oxo-1,3,2-dioxaphosphorinane. (Compound 9 in Table I).

A mixture of 7.64 g (50.0 m mole) of racemate of methionine and 13.83 g (50.0 m mole) of the (+)-dioxaphosphorinane was dissolved with heating in a mixture of 70 ml of 96% ethanol and 35 ml of water. After cooling the solution with agitation for 5 hours the precipitated diastereomeric salt was sucked off, washed with water and dried. The yield was 5.46 g (12.8 m mole, 26%) with $[\alpha]_{578}$ = +33.3. This salt was agitated for 4 hours with 45 ml of water, 6 ml of concentrated hydrochloric acid and 10 ml of methanol. From the non-dissolved fraction it was possible to recover 3.42 g (12.4 m mole) of dioxaphosphorinane

(96% yield) by filtration, washing with water and drying. The dissolved fraction was concentrated by evaporation, dissolved in water and purified over a Dowex-$H^+$ column.

After concentration by evaporation of the purified product, 1.6 g (10.7 m mole) of (+)-methionine were obtained with $[\alpha]_{578}$ = +21.8 (C = 0.797, 0.2N hydrochloric acid). The yield was 84%.

Example XV

Separation of the optical isomers of 1,2-di(4'-chlorophenyl)-1,2-diamino-ethane by means of (−)-5,5-dimethyl-4-phenyl-2-hydroxy-2-oxo-1,3,2-dioxaphosphorinane. (Compound 1 in Table I).

A mixture of 12.5 g (44.6 m mole) of the (−)-dioxaphosphorinane and 12.5 g (44.5 m mole) of the diamine was dissolved with heating in 75 ml of 96% ethanol. The mixture was cooled by leaving it to stand for 5½ hours with agitation and the occasional addition of seed crystals. The precipitate was filtered, washed with an ethanol/ether mixture and then with ether and then dried. The production was 6.38 g (12.2 m mole) of diastereomeric salt with $[\alpha]_{578}$ = +63.8. The yield was 27%. The diastereomeric salt was agitated with 2 g of sodium hydroxide in 50 ml of water. 25 ml of chloroform were then added and agitation was continued for half an hour. After dilution with 50 ml of water and 25 ml of chloroform, the layers were separated. The aqueous phase was extracted with 50 ml of chloroform. The chloroform fractions were washed with water, dried and concentrated by evaporation. The resulting oil, which solidified on cooling, had an $[\alpha]_{578}$ = +150.2 and weighed 3.38 g (12.0 m mole) equivalent to a 99% yield.

It was possible to recover in all 9.46 g of dioxaphosphorinane (88% yield).

## Claims

1. Dioxaphosphorinanes of the general formula I

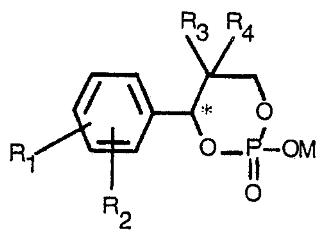

I

in which:

M denotes a hydrogen atom or a metal or ammonium ion,

$R_1$ and $R_2$ denote a hydrogen atom, a halogen atom, an alkyl group having 1 up to 4 carbon atoms, an alkoxy group having 1 up to 4 carbon atoms, a nitro group or together denote a methylene dioxy group and

$R_3$ and $R_4$ denote a hydrogen atom, a halogen atom, an alkyl group having 1 up to 4 carbon atoms or together denote a cyclohexyl group, one at most of the groups $R_3$ and $R_4$ denoting a hydrogen atom.

2. Dioxaphosphorinanes according to claim 1, having the general formula I in which:

$R_1$ and $R_2$ denote a hydrogen or chlorine atom, a methyl, ethyl, methoxy, ethoxy or nitro group or together denote a 3,4-methylene dioxy group and

$R_3$ and $R_4$ denote a hydrogen atom, a chlorine atom, a methyl group or together denote a cyclohexyl group, one at most of the groups $R_3$ and $R_4$ denoting a hydrogen atom.

3. Dioxaphosphorinanes according to claim 1, having the general formula I in which:

$R_1$ denotes a hydrogen or halogen atom at the para-position,

$R_2$ denotes a methoxy group or chlorine atom at the ortho-position and

$R_3$ and $R_4$ denote a methyl group.

4. Optically active isomers of the dioxaphosphorinanes according to claim 1.

5. Optically active isomers of the dioxaphosphorinanes according to claim 2.

6. Optically active isomers of the dioxaphosphorinanes according to claim 3.

7. A process for the preparation of dioxaphosphorinanes according to claims 1, 2 or 3, characterised in that a diol of the general formula II

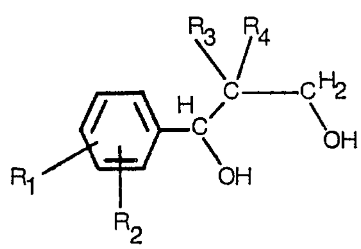

II

in which $R_1$ up to $R_4$ have the same meanings as in claims 1, 2 or 3, is reacted with phosphoryl chloride and the resulting product is hydrolyzed in an alkaline medium.

8. A process for the preparation of optically active isomers of a dioxaphosphorinanes according to claims 4, 5 or 6, characterised in that the corresponding racemate is reacted in a solvent with an optically

active amino-compound to form a diastereomeric salt which at least partially crystallizes out and a diastereomeric salt which remains in solution and after separation of the crystallized-out and dissolved salts one or both salts are hydrolyzed.

9. A process for separating the optically active isomers of amino-compound from the corresponding racemate, characterised in that the racemate is reacted with an optically active dioxaphosphorinane according to claims 4, 5 or 6 to form a diastereomeric salt which crystallizes out and a diastereomeric salt which remains in solution, the two salts are separated from one another and if necessary hydrolyzed.

10. A process for separating the optical isomers of parahydroxyphenylglycine, characterised in that the racemate of parahydroxyphenylglycine is reacted with an optically active dioxaphosphorinane according to claim 6 to form a diastereomeric salt which crystallizes out and a diastereomeric salt which remains in solution, the two salts are separated from one another and if necessary hydrolyzed.

11. A process for separating the optical isomers of phenylalanine, characterised in that the racemate of phenylalanine is reacted with an optically active dioxaphosphorinane according to claim 6 to form a diastereomeric salt which crystallizes out and a diastereomeric salt which remains in solution, the two salts are separated from one another and if necessary hydrolyzed.

12. A process for separating the optical isomers of 1-phenyl-2-paramethoxyphenyl-ethylamine, characterised in that the corresponding racemate is reacted with an optically active dioxaphosphorinane according to claim 6 to form a diastereomeric salt which crystallizes out and a diastereomeric salt which remains in solution, the two salts are separated from one another and if necessary hydrolyzed.

**Patentansprüche**

1. Dioxaphosphorinane der allgemeinen Formel (I)

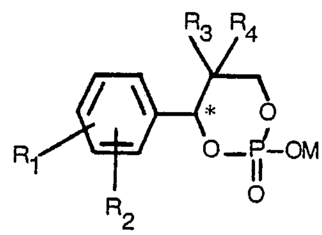

I

worin M ein Wasserstoffatom oder ein Metall- oder Ammoniumion bedeutet; $R_1$ und $R_2$ ein Wasserstoffatom, ein Halogenatom, eine Alkylgruppe mit 1 bis 4 Kohlenstoffatomen, eine Alkoxygruppe mit 1 bis 4 Kohlenstoffatomen oder eine Nitrogruppe bedeuten oder miteinander eine Methylendioxygruppe bilden; und $R_3$ und $R_4$ ein Wasserstoffatom, ein Halogenatom, eine Alkylgruppe mit 1 bis 4 Kohlenstoffatomen darstellen oder miteinander eine Cyclohexylgruppe bilden, wobei höchstens eine der Gruppen $R_3$ und $R_4$ ein Wasserstoffatom ist.

2. Dioxaphosphorinane nach Anspruch 1 der allgemeinen Formel (I), worin $R_1$ und $R_2$ ein Wasserstoff- oder Chloratom, eine Methyl-, Äthyl-, Methoxy-, Äthoxy- oder Nitrogruppe bedeuten oder miteinander eine 3,4-Methylendioxygruppe bilden; und $R_3$ und $R_4$ ein Wasserstoffatom, ein Chloratom oder eine Methylgruppe darstellen oder miteinander eine Cyclohexylgruppe bilden, wobei höchstens eine der Gruppen $R_3$ und $R_4$ ein Wasserstoffatom ist.

3. Dioxaphosphorinane nach Anspruch 1 der allgemeinen Formel (I), worin $R_1$ ein Wasserstoff- oder Halogenatom in p-Stellung ist; $R_2$ eine Methoxygruppe oder ein Chloratom in o-Stellung darstellt; und $R_3$ und $R_4$ eine Methylgruppe bedeuten.

4. Optisch aktive Isomere der Dioxaphosphorinane nach Anspruch 1.

5. Optisch aktive Isomere der Dioxaphosphorinane nach Anspruch 2.

6. Optisch aktive Isomere der Dioxaphosphorinane nach Anspruch 3.

7. Verfahren zur Herstellung von Dioxaphosphorinanen nach den Ansprüchen 1, 2 oder 3, dadurch gekennzeichnet, daß ein Diol der allgemeinen Formel (II)

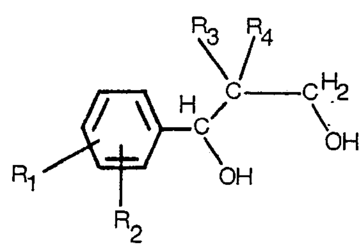

II

worin $R_1$ bis $R_4$ die gleichen Bedeutungen wie in den Ansprüchen 1, 2 oder 3 haben, mit Phosphorylchlorid umgesetzt und das erhaltene Produkt in einem alkalischen Medium hydrolysiert wird.

8. Verfahren zur Herstellung von optisch aktiven Isomeren eines Dioxaphosphorinans nach den

Ansprüchen 4, 5 oder 6,dadurch gekennzeichnet, daß das entsprechende Racemat in einem Lösungsmittel mit einer optisch aktiven Aminoverbindung unter Bildung eines diastereomen Salzes, das zumindest teilweise auskristallisiert, und eines diastereomeren Salzes, das in Lösung verbleibt, umgesetzt wird, und nach Trennung des auskristallisierten und des gelösten Salzes eines oder beide Salze hydrolysiert werden.

9. Verfahren zum Trennen der optisch aktiven Isomere einer Aminoverbindung vom entsprechenden Racemat, dadurch gekennzeichnet, daß das Racemat mit einem optisch aktiven Dioxaphosphorinan nach den Ansprüchen 4, 5 oder 6 unter Bildung eines diastereomeren Salzes, das auskristallisiert, und eines diastereomeren Salzes, das in Lösung verbleibt, umgesetzt wird und die beiden Salzes voneinander getrennt und, wenn notwendig, hydrolysiert werden.

10. Verfahren zum Trennen der optischen Isomere von p-Hydroxyphenylglycin, dadurch gekennzeichnet, daß das Racemat von p-Hydroxyphenylglycin mit einem optisch aktiven Dioxaphosphorinan nach Anspruch 6 unter Bildung eines diastereomeren Salzes, das auskristallisiert, und eines diastereomeren Salzes, das in Lösung verbleibt, umgesetzt wird und die beiden Salze voneinander getrennt und, wenn notwendig, hydrolysiert werden.

11. Verfahren zum Trennen der optischen Isomere von Phenylalanin, dadurch gekennzeichnet, daß das Racemat von Phenylalanin mit einem optisch aktiven Dioxaphosphorinan nach Anspruch 6 unter Bildung eines diastereomeren Salzes, das auskristallisiert, und eines diastereomeren Salzes, das in Lösung verbleibt, umgesetzt wird und die beiden Salze voneinander getrennt und, wenn notwendig, hydrolysiert werden.

12. Verfahren zum Trennen der optischen Isomere von 1-Phenyl-2-p-methoxyphenyläthylamin, dadurch gekennzeichnet, daß das entsprechende Racemat mit einem optisch aktiven Dioxaphosphorinan nach Anspruch 6 unter Bildung eines diastereomeren Salzes, das auskristallisiert, und eines diastereomeren Salzes, das in Lösung verbleibt, umgesetzt wird und die beiden Salze voneinander getrennt und, wenn notwendig, hydrolysiert werden.

**Revendications**

1. Dioxaphosphorinanes répondant à la formule générale I:

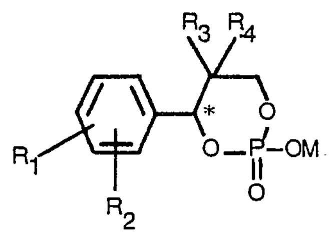

I

dans laquelle:

M désigne un atome d'hydrogène ou un ion métallique ou d'ammonium,

$R_1$ et $R_2$ représentent chacun un atome d'hydrogène, un atome d'halogène, un radical alkyle de 1 à 4 atomes de carbone, un radical alcoxy de 1 à 4 atomes de carbone ou un radical nitro ou bien ils représentant ensemble un groupe méthylène-dioxy; et

$R_3$ et $R_4$ représentent chacun un atome d'hydrogène, un atome d'halogène ou un radical alkyle de 1 à 4 atomes de carbone ou bien, conjointement, un groupe cyclohexyle, l'un des groupes $R_3$ et $R_4$ ou plus désignant un atome d'hydrogène.

2. Dioxaphosphorinanes selon la revendication 1, répondant à la formule générale I, dans laquelle:

$R_1$ et $R_2$ représentant chacun un atome d'hydrogène ou de chlore, un radical méthyle, éthyle, méthoxy, éthoxy ou nitro ou bien, ensemble, un groupe 3,4-méthylènedioxy; et

$R_3$ et $R_4$ représentent chacun un atome d'hydrogène, un atome de chlore ou un radical méthyle ou, ensemble, un groupe cyclohexyle, au plus l'un des groupes $R_3$ et $R_4$ désignant un atome d'hydrogène.

3. Dioxaphosphorinanes selon la revendication 1, répondant à la formule générale I dans laquelle:

$R_1$ désigne un atome d'hydrogène ou un atome d'halogène en position para;

$R_2$ désigne un radical méthoxy ou un atome de chlore en position ortho; et

$R_3$ et $R_4$ désignent chacun un radical méthyle.

4. Isomères optiquement actifs des dioxaphosphorinanes selon la revendication 1.

5. Isomères optiquement actifs des dioxaphosphorinanes selon la revendication 2.

6. Isomères optiquement actifs des dioxaphosphorinanes selon la revendication 3.

7. Procédé de préparation de dioxaphosphorinanes selon la revendication 1, 2 ou 3, caractérisé en ce qu'on fait réagir un diol de formule générale II:

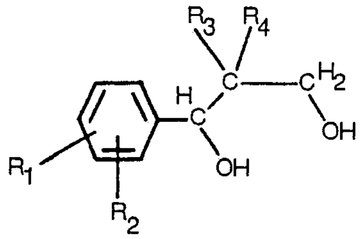

II

dans laquelle les radicaux $R_1$ à $R_4$ ont les mêmes significations que dans la revendication 1, 2 ou 3, avec le chlorure de phosphoryle et on hydrolyse le produit résultant dans un milieu alcalin.

8. Procédé de préparation d'isomères optiquement actifs d'un dioxaphosphorinane selon la revendication 4, 5 ou 6, caractérisé en ce qu'on fait réagir le racémate correspondant dans un solvant avec un composé amino optiquement actif pour former un sel diastéréomère qui cristallise au moins partiellement et un sel diastéréomère qui demeure en solution, et après séparation du sel cristallisé et du sel dissous, on hydrolyse l'une des sels ou les deux.

9. Procédé de séparation d'isomères optiquement actifs d'un composé amino à partir du racémate correspondant, caractérisé en ce qu'on fait réagir le racémate avec un dioxaphosphorinane optiquement actif selon la revendication 4, 5 ou 6 pour former un sel diastéréomère qui cristallise et un sel diastéréomère qui demeure en solution, puis on sépare les deux sels l'un de l'autre et, si nécessaire, on hydrolyse.

10. Procédé de séparation des isomères optiques de parahydroxyphénylglycine, caractérisé en ce qu'on fait réagir le racémate de parahydroxyphénylglycine avec un dioxaphosphorinane optiquement actif selon la revendication 6, pour former un sel diastéréomère qui cristallise et un sel diastéréomère qui demeure en solution, on sépare les deux sels l'un de l'autre et, si nécessaire on hydrolyse.

11. Procédé de séparation des isoméres optiques de phénylalanine, caractérisé en ce qu'on fait réagir le racémate de la phénylalanine avec un dioxaphosphorinane optiquement actif selon la revendication 6, pour former un sel diastéréomère qui cristallise et un sel diastéréomère qui demeure en solution, on sépare les deux sels l'un de l'autre et, si nécessaire, on hydrolyse.

12. Procédé de séparation des isomères optiques de 1-phényl-2-paraméthoxyphényl-éthylamine, caractérisé en ce qu'on fait réagir le racémate correspondant avec un dioxaphosphorinane optiquement actif selon la revendication 6, pour former un sel diastéréomère qui cristallise et un sel diastéréomère qui demeure en solution, on sépare les deux sels l'un de l'autre et, si nécessaire, on hydrolyse.